# EUROPEAN PATENT APPLICATION

(11) **EP 4 697 001 A1**
(43) Date of publication of application: **18.02.2026**
(21) Application number: 24788906.6
(22) Date of filing: 08.03.2024
(51) Int. Cl.: G01N 1/10, G21F 9/30, G01N 1/00

(54) **GLASS MELT SAMPLE COLLECTION SYSTEM**

(30) Priority: 10.04.2023 KR 20230046941
(71) Applicant: Korea Hydro & Nuclear Power Co., Ltd, Gyeongju-si, Gyeongsangbuk-do 38120 (KR)
(72) Inventor: HWANG, Young Hwan, Daejeon 34101 (KR); HWANG, Seok Ju, Daejeon 34101 (KR); KIM, Cheon Woo, Daejeon 34101 (KR)
(74) Representative: Keenway Patentanwälte Neumann Heine Taruttis
(86) International application number: PCT/KR2024/003016
(87) International publication number: WO 2024/214962

(57) **Abstract**

Provided is a sampling system which collects a portion of molten glass generated in a melting furnace of a radioactive waste vitrification facility for vitrifying radioactive waste as a molten glass sample. A sampling system according to an embodiment of the present disclosure collects a portion of molten glass generated and discharged from a vitrification facility, which includes a vitrification furnace and a vitrified solid mold and vitrifies radioactive waste, as a molten glass sample. The sampling system includes a molten glass sampling device, wherein the molten glass sampling device may include: a sample receiving unit receiving the molten glass sample discharged from the vitrification furnace; a transfer pipe connected to the sample receiving unit and transferring the received molten glass sample; and a sample solidification mold connected to the transfer pipe and solidifying the molten glass sample into a sample solid.

## Description

### [Technical Field]

The present disclosure relates to a sampling system capable of collecting a molten glass sample from a vitrification furnace and evaluating the characteristics of the sample in order to evaluate the characteristics of a vitrified solid, which is essential for disposal of the vitrified solid discharged from a vitrification facility.

### [Background Art]

Radioactive waste generated from nuclear power plants or radioactive isotope utilization facilities must be disposed of safely. Radioactive waste is classified into low- and intermediate-level waste and high-level waste according to the intensity of radioactivity. Most of the low- and intermediate-level radioactive waste includes waste generated during the operation of nuclear power plants, such as filter media, ion exchange resins, concentrated residue from waste liquid evaporators, and miscellaneous items such as work clothes, tools and waste paper used by radiation workers.

Such low- and intermediate-level radioactive waste is mixed with a solidifying agent, such as cement or paraffin, and sealed in a waste drum. Then, it is solidified or compressed and sealed in the waste drum and stored in a safe place such as a waste management facility. However, the installation and maintenance of waste management facilities require considerable manpower and cost, and many difficulties are encountered in the installation due to social avoidance, which is emerging as a serious social problem.

As a technology for processing low- and intermediate-level radioactive waste, vitrification technology is used to process waste into a vitrified solid by melting the waste at a high temperature together with glass after the combustion and pyrolysis of the waste. The vitrification technology for low- and intermediate-level radioactive waste can not only drastically reduce the amount of waste, but also permanently block radiation leaks.

When radioactive waste is processed through a vitrification facility, it is necessary to evaluate the characteristics of a vitrified solid formed from molten glass discharged from the vitrification facility in order to dispose of the vitrified solid. In the past, there were many difficulties in terms of safety and workability because workers had to be deployed to directly collect a portion of molten glass as a sample.

### [Disclosure]

### [Technical Problem]

The present disclosure has been made to solve the foregoing problems and therefore an aspect of the present disclosure is to provide a sampling system for collecting a portion of molten glass generated in a melting furnace of a vitrification facility as a molten glass sample.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

### [Technical Solution]

According to an aspect of the present disclosure, there is provided a sampling system collecting a portion of molten glass generated and discharged from a vitrification facility, which includes a vitrification furnace and a vitrified solid mold and vitrifies radioactive waste, as a molten glass sample. The sampling system includes a molten glass sampling device, wherein the molten glass sampling device may include: a sample receiving unit receiving the molten glass sample discharged from the vitrification furnace; a transfer pipe connected to the sample receiving unit and transferring the received molten glass sample; and a sample solidification mold connected to the transfer pipe and solidifying the molten glass sample into a sample solid.

The sample solidification mold may be detachably connected to the transfer pipe.

The molten glass sampling device may further include a heat insulating cover covering the outside of the sample solidification mold.

The molten glass sampling device may further include a heating unit located on the outside of the transfer pipe and providing heat to maintain the temperature of the molten glass sample being moved.

The sampling system may further include a rail unit located at the bottom of the vitrification furnace.

The molten glass sampling device may be connected to the rail unit and moved on the rail unit.

When the molten glass sampling device collects the molten glass sample, the molten glass sampling device may move on the rail unit to overlap a discharge nozzle of the vitrification furnace.

When the molten glass sampling device collects the molten glass sample, the sample solidification mold may be positioned close to the vitrified solid mold.

When the molten glass sampling device completes collecting the molten glass sample, the molten glass sampling device may move on the rail unit to an edge of the vitrification furnace so as not to overlap the discharge nozzle of the vitrification furnace.

The sampling system may include a plurality of molten glass sampling devices.

Other details of the present disclosure are included in the detailed description and the drawings.

### [Advantageous Effects]

According to the present disclosure, it is possible to provide a sampling system for collecting a portion of molten glass generated in a melting furnace of a vitrification facility as a molten glass sample.

### [Description of Drawings]

FIG. 1 illustrates a molten glass sampling device of a molten glass sampling system according to an embodiment of the present disclosure;
FIG. 2 illustrates a rail unit of the molten glass sampling system according to the embodiment of the present disclosure;
FIGS. 3 through 5 illustrate a sampling process of the molten glass sampling system according to the embodiment of the present disclosure; and
FIG. 6 illustrates a case where the molten glass sampling system according to the embodiment of the present disclosure includes a plurality of molten glass sampling devices.

### [Best Mode]

The present disclosure discloses a sampling system collecting a portion of molten glass generated and discharged from a vitrification facility, which includes a vitrification furnace and a vitrified solid mold and vitrifies radioactive waste, as a molten glass sample. The sampling system includes a molten glass sampling device, wherein the molten glass sampling device may include: a sample receiving unit receiving the molten glass sample discharged from the vitrification furnace; a transfer pipe connected to the sample receiving unit and transferring the received molten glass sample; and a sample solidification mold connected to the transfer pipe and solidifying the molten glass sample into a sample solid.

### [Mode for Invention]

Hereinafter, exemplary embodiments of the present disclosure will be described in further detail with reference to the attached drawings. Advantages and features of the present disclosure and methods of accomplishing the same may be understood more readily by reference to the following detailed description of exemplary embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the present disclosure to those skilled in the art, and the present disclosure will only be defined by the appended claims. Like reference numerals refer to like elements throughout the specification.

Hereinafter, a molten glass sampling system according to an embodiment of the present disclosure will be described.

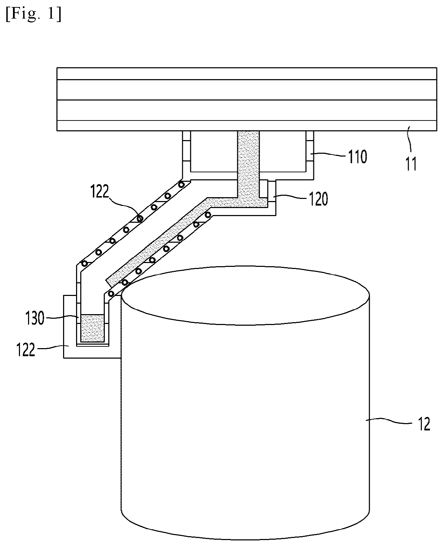

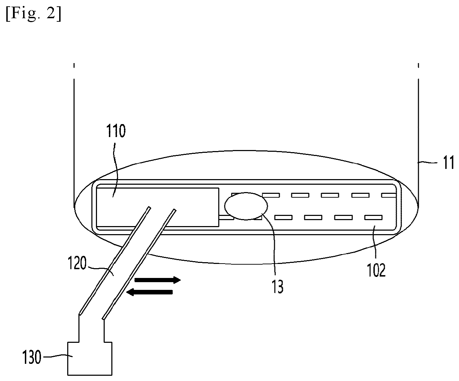

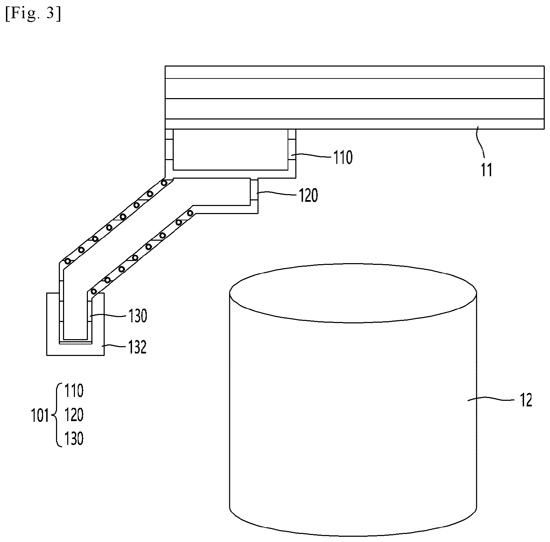

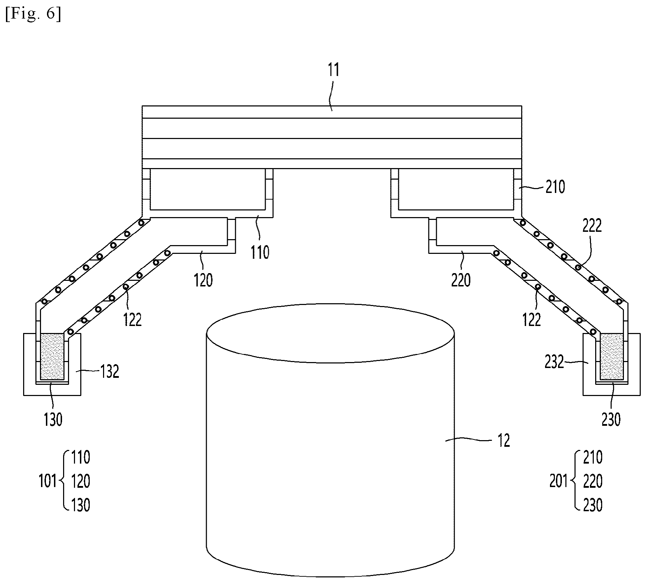

FIG. 1 illustrates a molten glass sampling device of a molten glass sampling system according to an embodiment of the present disclosure. FIG. 2 illustrates a rail unit of the molten glass sampling system according to the embodiment of the present disclosure. FIGS. 3 through 5 illustrate a sampling process of the molten glass sampling system according to the embodiment of the present disclosure. FIG. 6 illustrates a case where the molten glass sampling system according to the embodiment of the present disclosure includes a plurality of molten glass sampling devices.

A molten glass sampling system 100 according to an embodiment of the present disclosure may collect a portion of molten glass generated from a vitrification facility as a molten glass sample. Here, the vitrification facility may include a vitrification furnace 11 and a vitrified solid mold 12.

More specifically, the vitrification facility is a facility that disposes of radioactive waste more safely. It can not only drastically reduce the volume of low- and intermediate-level radioactive waste, but also minimize the leakage of radioactive materials into the surroundings in any environment, thereby greatly improving the safety of radioactive waste disposal.

The radioactive waste vitrification facility can fundamentally block the leakage of radioactive materials into the environment by combining radioactive waste with a glass structure and can also innovatively reduce the volume of radioactive waste. Vitrification technology can reduce the initial volume of all combustible and non-combustible low- and intermediate-level radioactive waste generated at nuclear power plants to 1/20 or less. Therefore, it can greatly contribute to securing the safety of radioactive waste disposal as well as stably promoting disposal projects for the construction of management facilities.

The radioactive waste vitrification facility may generally vitrify radioactive waste through the following process.

Glass raw materials are fed into an induction heating-type vitrification furnace, and the glass is melted by heat induced by an electromagnetic field. When molten glass of about 1100 °C is generated, finely crushed waste stored in a radioactive waste storage unit is supplied to the molten glass through a radioactive waste supply device. Then, the finely crushed waste is decomposed on the molten glass, and radioactive materials are firmly bonded to glass components. Combustible wastes that can be processed in the induction heating-type vitrification furnace 11 include clothes, gloves, shoes and tissues used by workers and low-radioactive waste resin used for water purification at nuclear power plants.

Radionuclides that form a glass structure cannot escape the glass structure under any environmental conditions. The strength of the bond between the glass structure and the radionuclides can be checked through an internationally recognized leaching test.

Referring to FIG. 1, the sampling system 100 according to the embodiment of the present disclosure may collect a portion of molten glass generated and discharged from the vitrification facility, which includes the vitrification furnace 11 and the vitrified solid mold 12 and vitrifies radioactive waste, as a molten glass sample.

To this end, the sampling system 100 may include a molten glass sampling device 101.

Referring to FIG. 1, the molten glass sampling device 101 according to an embodiment of the present disclosure may include a sample receiving unit 110, a transfer pipe 120, and a sample solidification mold 130.

The molten glass sampling device 101 of the present disclosure may collect a portion of molten glass discharged from the vitrification furnace 11 as a sample. When the molten glass discharged from the vitrification furnace 11 becomes a vitrified solid, it is necessary to evaluate the characteristics of the vitrified solid in order to dispose of the vitrified solid.

To this end, a portion of the molten glass may be collected as a molten glass sample, and the characteristics of the molten glass sample may be evaluated. Then, based on evaluation data, the characteristics of low- and intermediate-level radioactive waste put into the glass solidification mold and transformed into a vitrified solid can be identified. Since the vitrified solid can be disposed of according to the identified characteristics, the safety and efficiency of radioactive waste disposal can be improved.

First, the molten glass sampling device 101 according to the embodiment of the present disclosure may include the sample receiving unit 110.

The sample receiving unit 110 may face the bottom of the vitrification furnace 11. In particular, when collecting a molten glass sample, the sample receiving unit 110 may be positioned to overlap a molten glass discharge nozzle 13 (see FIG. 2) of the vitrification furnace 11.

An upper end of the sample receiving unit 110 may be connected to a rail unit 102 (see FIG. 2) which will be described later. Since the upper end of the sample receiving unit 110 is connected to the rail unit 102, the sample receiving unit 110 may move on the rail unit 102. For example, the sample receiving unit 110 may slide and move on the rail unit 102. As the sample receiving unit 110 moves, the transfer pipe 120 connected to the sample receiving unit 110 and the sample solidification mold 130 connected to the transfer pipe 120 may also move on the rail unit 102.

The sample receiving unit 110 temporarily stores a molten glass sample which is a portion of molten glass discharged from the discharge nozzle 13 of the vitrification furnace 11. The sample receiving unit 110 transfers the temporarily stored molten glass sample to the transfer pipe 120. To this end, a lower end of the sample receiving unit 110 is connected to the transfer pipe 120.

Next, the molten glass sampling device 101 according to the embodiment of the present disclosure may include the transfer pipe 120 connected to the sample receiving unit 110.

The molten glass sample temporarily stored in the sample receiving unit 110 is transferred to the transfer pipe 120 and then transferred to the sample solidification mold 130. To transfer the molten glass sample to the sample solidification mold 130 by gravity, the transfer pipe 120 may be tilted vertically at a selected angle.

The transfer pipe 120 may have a tubular shape that allows the molten glass sample to flow and may be made of stainless steel or the like for corrosion resistance.

A heating unit 122 may be located on the outside of the transfer pipe 120. That is, the molten glass sampling device 101 may include the heating unit 122 on the outside of the transfer pipe 120 to facilitate the flow of the molten glass sample inside the transfer pipe 120. Accordingly, the heating unit 122 may transmit heat to the molten glass sample inside the transfer pipe 120, and the molten glass sample that has received the heat may maintain its temperature and fluidity without being solidified.

The heating unit 122 may include, for example, a high-frequency induction coil. In this case, the high-frequency induction coil may be wound on an outer surface of the transfer pipe 120. The high-frequency induction coil may convert electrical energy supplied from an external power source (not shown) into thermal energy. That is, the thermal energy is transmitted to the transfer pipe 120, which is a conductor, to heat the transfer pipe 120. When the transfer pipe 120 is heated, the heat is supplied to the molten glass sample inside the transfer pipe 120, thereby maintaining the fluidity of the molten glass sample.

Next, the molten glass sampling device 101 according to the embodiment of the present disclosure may include the sample solidification mold 130 which is connected to the transfer pipe 120 and solidifies the molten glass sample into a sample solidified body.

The sample solidification mold 130 receives the molten glass sample from the transfer pipe 120 and slowly cools the molten glass sample into a sample solid. The sample solidification mold 130 may be shaped like a container with an open top and a bottom and sides in order to accommodate the molten glass sample.

The sample solidification mold 130 is detachable. That is, after the sample solidification mold 130 receives the molten glass sample and slowly cools the molten glass sample into a sample solid, it can be detached by a worker. The sample solidification mold 130 can be detached from an end of the transfer pipe 120. When the sample solidification mold 130 is detached, the sample solid formed in the sample solidification mold 130 can be obtained, and its characteristics can be evaluated. Based on the evaluation of the characteristics of the sample solid, the characteristics of the molten glass generated in the vitrification furnace 11 can be evaluated.

When the sample solidification mold 130 is detached to obtain the sample solid, the molten glass sampling device 101 is in a state without the sample solidification mold 130. At this time, the empty sample solidification mold 130 not containing the sample solid can be attached to the end of the transfer pipe 120. Accordingly, the molten glass sampling work can be performed continuously. In conclusion, the sample solidification mold 130 can be detachably provided in the molten glass sampling device 101, and a molten glass sample can be collected continuously.

The molten glass sampling device 101 may include a heat insulating cover 132 which covers the outside of the sample solidification mold 130. Due to the heat insulating cover 132, a molten glass sample accommodated in the sample solidification mold 130 may gradually cool into a sample solid.

Referring to FIG. 2, the sampling system 100 may include the rail unit 102. The rail unit 102 may be located at the bottom of the vitrification furnace 11 so that the molten glass sampling device 101 can be moved at the bottom of the vitrification furnace 11. That is, the rail unit 102 may be located across the bottom of the vitrification furnace 11.

The molten glass sampling device 101 may be connected to the rail unit 102 and may be moved on the rail unit 102. The upper end of the sample receiving unit 110 of the molten glass sampling device 101 may be connected to the rail unit 102.

The molten glass sampling device 101 may collect a molten glass sample or finish collecting a molten glass sample while moving on the rail unit 102. Details of how the molten glass sampling device 101 collects a molten glass sample while moving on the rail unit 102 will be described later.

A process of collecting a molten glass sample by using the sampling system 100 according to the embodiment of the present disclosure will be described with reference to FIGS. 3 through 5.

Referring to FIG. 3, the molten glass sampling device 101 of the sampling system 100 is connected to the rail unit 102. Before collecting a molten glass sample, the molten glass sampling device 101 may stand by at an edge of the vitrification furnace 11.

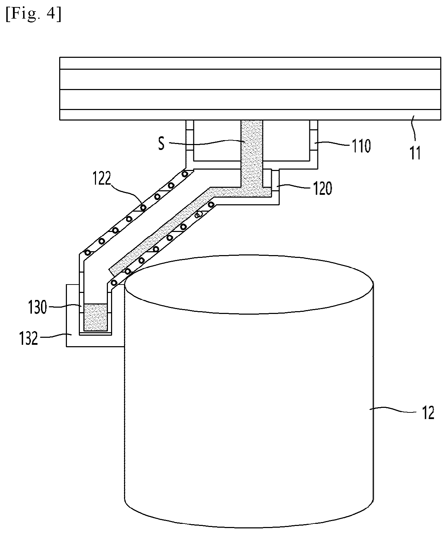

Referring to FIG. 4, the molten glass sampling device 101 moves on the rail unit 102 to collect a molten glass sample. Here, the molten glass sampling device 101 moves on the rail unit 102 so that the sample receiving unit 110 of the molten glass sampling device 101 faces (i.e., overlaps) the discharge nozzle of the vitrification furnace 11.

That is, when the molten glass sampling device 101 is to collect a molten glass sample, the molten glass sampling device 101 moves on the rail unit 13 to overlap the discharge nozzle 13 of the vitrification furnace. After completing the movement, the molten glass sampling device 101 collects a molten glass sample S from the vitrification furnace 11.

The sample receiving unit 110 of the molten glass sampling device 101 receives the molten glass sample S discharged from the discharge nozzle 13. The molten glass sample S received in the sample receiving unit 110 flows to the sample solidification mold 130 through the transfer pipe 120. At this time, the heating unit 122 located on the outside of the transfer pipe 120 may provide heat to the molten glass sample S in order to prevent the molten glass sample S from solidifying.

The molten glass sample transferred to the sample solidification mold 130 through the transfer pipe 120 is accommodated in the sample solidification mold 130. The molten glass sample accommodated in the sample solidification mold 130 may be cooled slowly into a sample solid. To this end, when the molten glass sampling device 101 collects a molten glass sample, the sample solidification mold 130 may be positioned close to the vitrified solid mold 12.

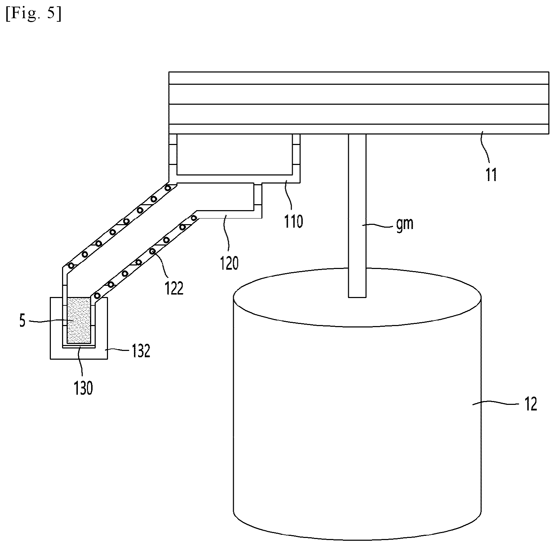

Next, referring to FIG. 5, when the molten glass sampling device 101 completes collecting the molten glass sample, the molten glass sampling device 101 may move on the rail unit 102 to the edge of the vitrification furnace 11 so as not to overlap the discharge nozzle 13 of the vitrification furnace 11. At this time, when the molten glass sampling device 101 moves to the edge of the vitrification furnace 11, molten glass discharged from the discharge nozzle 13 of the vitrification furnace 11 is introduced into the vitrified solid mold 12. The molten glass introduced into the vitrified solid mold 12 is cooled and solidified into a vitrified solid.

After the molten glass sampling device 101 moves to the edge, the sample solidification mold 130 is detached from the molten glass sampling device 101 in order to obtain the sample solid formed in the sample solidification mold 130 and evaluate its characteristics. After the sample solid is obtained from the detached sample solidification mold 130, the characteristics of the sample solid may be evaluated to identify the characteristics of the molten glass generated in the vitrification furnace 11.

Through the above process, the sampling system 100 including the molten glass sampling device 101 and the rail unit 102 can collect a molten glass sample.

Referring to FIG. 6, the sampling system 100 of the present disclosure can include a plurality of molten glass sampling devices 101 and 201. Accordingly, when one molten glass sampling device 101 completes collecting a molten glass sample, another molten glass sampling device 201 can continuously collect a molten glass sample. The molten glass sampling devices 101 and 201 may move on the rail unit 102. The molten glass sampling devices 101 and 201 may be flexibly operated on the rail unit 102 depending on the collecting situation, the vitrification facility operation situation, the state of the radioactive waste, etc.

According to the present disclosure, it is possible to easily collect a sample for characteristic evaluation which is essential for disposal of a vitrified solid of radioactive waste manufactured through a vitrification facility. According to the present disclosure, there is an advantage in that a worker can remotely collect a molten glass sample without the need to directly collect the molten glass sample from a vitrification furnace.

While the present disclosure has been particularly shown and described with reference to exemplary embodiments thereof, it will be understood by those of ordinary skill in the art that various changes in form and detail may be made therein without departing from the spirit and scope of the present disclosure as defined by the following claims. The exemplary embodiments should be considered in a descriptive sense only and not for purposes of limitation.

## Claims

1. A sampling system collecting a portion of molten glass generated and discharged from a vitrification facility, which comprises a vitrification furnace and a vitrified solid mold and vitrifies radioactive waste, as a molten glass sample and comprising a molten glass sampling device, wherein the molten glass sampling device comprises:
a sample receiving unit receiving the molten glass sample discharged from the vitrification furnace;
a transfer pipe connected to the sample receiving unit and transferring the received molten glass sample; and
a sample solidification mold connected to the transfer pipe and solidifying the molten glass sample into a sample solid.

2. The system of claim 1, wherein the sample solidification mold is detachably connected to the transfer pipe.

3. The system of claim 2, wherein the molten glass sampling device further comprises a heat insulating cover covering the outside of the sample solidification mold.

4. The system of claim 1, wherein the molten glass sampling device further comprises a heating unit located on the outside of the transfer pipe and providing heat to maintain the temperature of the molten glass sample being moved.

5. The system of claim 1, further comprising a rail unit located at the bottom of the vitrification furnace.

6. The system of claim 5, wherein the molten glass sampling device is connected to the rail unit and moved on the rail unit.

7. The system of claim 6, wherein when the molten glass sampling device collects the molten glass sample, the molten glass sampling device moves on the rail unit to overlap a discharge nozzle of the vitrification furnace.

8. The system of claim 7, wherein when the molten glass sampling device collects the molten glass sample, the sample solidification mold is positioned close to the vitrified solid mold.

9. The system of claim 6, wherein when the molten glass sampling device completes collecting the molten glass sample, the molten glass sampling device moves on the rail unit to an edge of the vitrification furnace so as not to overlap the discharge nozzle of the vitrification furnace.

10. The system of claim 1, comprising a plurality of molten glass sampling devices.
